(19)

Europäisches
Patentamt
European
Patent Office
Office européen
des brevets

(11)  **EP 4 424 493 A1**

(12)  **EUROPEAN PATENT APPLICATION**

(43)  Date of publication:
**04.09.2024  Bulletin 2024/36**

(21)  Application number: **23461528.4**

(22)  Date of filing: **01.03.2023**

(51)  International Patent Classification (IPC):
**B29C 64/227** (2017.01)   **B29C 64/245** (2017.01)
**B29C 64/393** (2017.01)   **B33Y 10/00** (2015.01)
**B33Y 30/00** (2015.01)   **B33Y 50/02** (2015.01)

(52)  Cooperative Patent Classification (CPC):
**B29C 64/245; B29C 64/227; B29C 64/393;
B33Y 10/00; B33Y 30/00; B33Y 50/02;**
B29C 64/118

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71)  Applicant: **Uniwersytet Zielonogórski
65-417 Zielona Góra (PL)**

(72)  Inventors:
• **PACZKOWSKI, Jacek
  67-100 Nowa Sol (PL)**

• **OSTROWSKI, Kacper
  65-533 Zielona Gora (PL)**
• **KRAMEK, Krzysztof
  65-124 Zielona Gora (PL)**
• **MRUGALSKI, Marcin
  65-128 Zielona Gora (PL)**

(74)  Representative: **JD&P Patent Attorneys
Joanna Dargiewicz & Partners
ul. Mysliborska 93A/50
03-185 Warszawa (PL)**

(54)  **METHOD OF AUTOMATIC LEVELLING OF A 3D PRINTER TABLE MOVABLE ALONG THE Z-AXIS**

(57)    The subject of the invention is a method of automatic levelling of the table of a 3D printer with the table movable along the Z-axis, in which the deviation of the 3D printer body from the horizontal position is measured using a three-axial reference acceleration sensor placed on the body of said 3D printer and the length of the vector (X, Y, Z) is determined; the deviation of the 3D printer table from the horizontal position is measured using the three-axial measurement acceleration sensor placed on the table or below the table of said 3D printer and the length of the vector (X2, Y2, Z2) is determined; the error vector (dX, dY, dZ) is determined; if the values dX and dY are greater than zero, the step motors Z1, Z2, Z3 of the Z-axis adjusting the position of the printer table are actuated in order to ensure parallelity of the table and the 3D printer base/body, aiming at achieving dX and dY values close/equal to zero, wherein both sensors are set parallel to each other in all three axes during the assembly stage of said 3D printer.

Fig. 3

EP 4 424 493 A1

**Description**

The subject of the invention is a method of automatic levelling of a 3D printer table movable along the Z-axis.

**Background of the invention**

The market is dominated by two filament printer solutions: with a table movable along the Y-axis and with a table movable along the Z-axis.

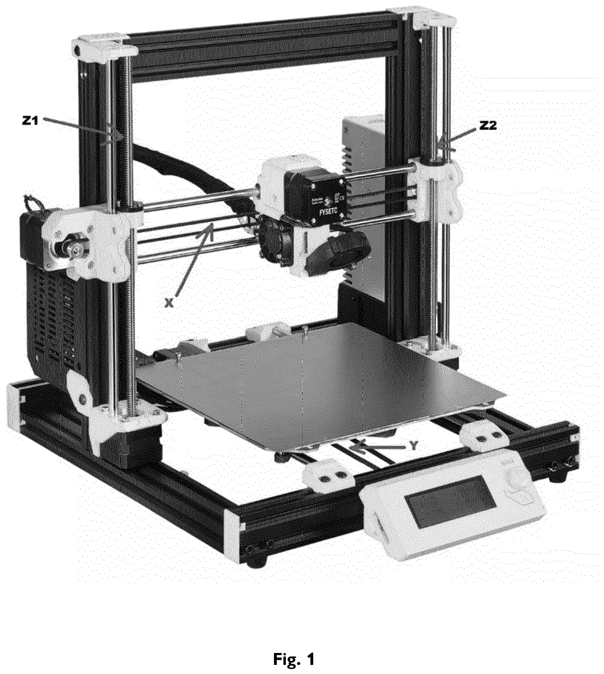

Fig. 1 presents a 3D printer with a table movable along the Y-axis, where

    Z1 - left drive screw of the Z-axis;
    Z2 - right drive screw of the Z-axis;
    X - toothed belt driving the X-axis;
    Y - toothed belt driving the Y-axis;

The head moves along the X-axis using bar-type guides. The X-axis moves along the Z-axis using two independent drives. The table is levelled using four screws with knobs.

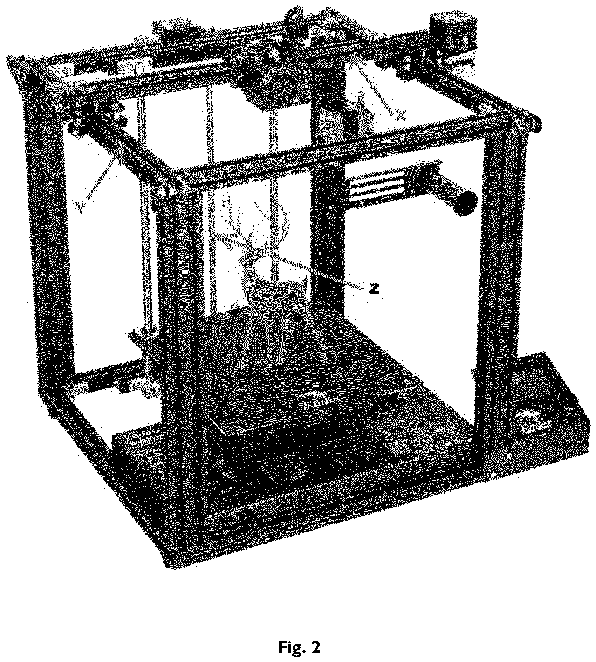

Fig. 2 presents a 3D printer with a table movable along the Z-axis, where

    Z - drive screw of the Z-axis;
    X - toothed belt driving the X-axis;
    Y - toothed belt driving the Y-axis;

The table is also levelled using four screws with knobs.

Printers with a table movable along the Y-axis are usually provided with two drive screws and two step motors moving a bar, on which the head movable along the X-axis is installed. Such printers are usually provided with one limiting switch for the Z-axis, at the left drive screw. This means that the right screw is not positioned in any way. It is set during the assembly and remains in its position. Only the X-axis can be (coarsely) adjusted by turning the screw manually.

Both Z-axis motors must perform the same number of steps simultaneously in order to set this bar parallel to the table. At the same time, the bar has to be set parallel to the table before printing.

The head can be pressed with a hand during filament replacement, which (inadvertently) forces one of the motors into motion and the bar is no longer positioned parallel to the table.

Printers are usually not provided with sensors detecting this displacement or with a mechanism restoring the parallel position.

A disadvantage of printers known in the art lies in the fact that the table is levelled "coarsely" and manually. In the case of printers with the table movable along the Y-axis, the X-axis is also levelled manually. This means that the printouts are often failed, which is particularly irritating and discouraging for persons without the experience in 3D printing.

**Prior art**

Chinese documents CN214927116U and CN114683540A disclose levelling methods in 3D printers, using a single acceleration (gravity) sensor placed on the moving table of the 3D printer. The controlling algorithm sets the table such that the acceleration sensor indicates the gravity vector as perpendicular to the table surface. The perpendicular direction to the gravity vector means that the table is in its horizontal position. The automatic levelling process is initiated by pressing a button. These solutions are the most similar to this invention. The use of a single gravity sensor is a disadvantage of this solution. If such a printer is placed on a surface which is not horizontal (is inclined e.g. at a 3° angle), the algorithm will result in the table placed horizontally, but the plane in which the nozzle head is moving will be parallel to the substrate and not to the table. This means that the distance between the head and the table is not constant and the printout will be incorrect. The solution according to CN114683540A ensures perpendicular direction to the gravity vector, although it should ensure parallel position to the plane of the nozzle of the printer head. The four support points of the table cause stress in the table and result in its deformation (bending). Three support points allow any plane to be defined, while the fourth point introduces the deformation.

In the description of the Chinese utility model CN205573046U, a printer with a table movable in the Y-axis is disclosed, in which the height of one of the heads is adjusted such that both heads are at the same distance from the table surface. This solves the problem arising after replacement of one of the nozzles, if the new nozzle is marginally longer than the removed nozzle. This means that the new nozzle is located lower than the other nozzle, thus "drawing" over the printout of the other nozzle. The "coarse" manual adjustment of the head location, which should be performed, is a disadvantage of this solution. Additionally, the position of the X bar can be easily changed by pressing the head at one side. The X bar then moves downwards and is no longer placed horizontally. Both nozzles can be at the same level, but the printout is incorrect.

The description of another Chinese utility model CN214294497U discloses a solution, in which an acceleration sensor is used to place the table in a horizontal position. This solution as the same disadvantage as described above.

From the documents described above and known in the art it can be concluded that automatic levelling of the printer table is performed manually and only once, before the printout is started.

The patent PAT.224626 B1 related to a system preparing the printout basis of a 3D printer and a method of preparation of the printout basis of a 3D printer discloses a solution known from the printers made by Zortrax. The printer table has three fields in the corners of the table, made of insulated metal. Levelling involves placement of the head about such a field and lowering the head until the nozzle contacts the field. This results in a flow of electric current, which confirms that the head touched the field. The level at which the head is located at the time the nozzle touches the field is saved, together with X and Y coordinates. This activity is repeated for the other fields. This results in three sets of numbers (X, Y, Z) informing about the deviation of the table from the horizontal position. Next, the "printout basis", the so-called raft is printed on the table surface. The surface of the printout basis is parallel to the motion plane of the nozzle. This avoids mechanical changes to the position of the table. The worse quality of the bottom surface of the printout after peeling the raft from the printout is a disadvantage of this solution.

Thus, a demand for solution enabling simple and effective levelling of individual elements of a 3D printer, ensuring correct printout, still exists in the art.

The objective the invention was thus to develop a method of automatic levelling of a 3D printer table movable along the Z-axis.

This objective has been achieved through the method according to this invention.

**Summary of the invention**

The subject of the invention is a method of automatic levelling of a 3D printer table movable along the Z-axis, involving steps, in which

- the deviation of the 3D printer body from the horizontal position is measured using a three-axial reference acceleration sensor placed on the body of said 3D printer and the length of the (X, Y, Z) vector is determined,

- the deviation of the table of the 3D printer from the horizontal position is measured using a three-axial measurement acceleration sensor placed on the table or under the table of said 3D printer and the length of the (X2, Y2, Z2) vector is determined,

- the error vector (dX, dY, dZ) is determined

$$(dX, dY, dZ) = (X2, Y2, Z2) - (X, Y, Z)$$

- if the values dX and dY are greater than zero, the step motors Z1, Z2 and Z3 of the Z-axis adjusting the position of the printer table are actuated in order to ensure the parallel position of the table to the 3D printer base/body, aiming to achieve the dX and dY values close/equal to zero,

wherein both sensors:

    the three-axial reference acceleration sensor placed on the body of said 3D printer and
    the three-axial measurement acceleration sensor placed on the table or under the table of said 3D printer
    are set as parallel to each other along all three axes during the assembly stage of said 3D printer.

Preferably, both sensors - the three-axial reference acceleration sensor placed on the body of said 3D printer and the three-axial measurement acceleration sensor placed on the table or under the table of said 3D printer are of the same type.

Preferably, both sensors - the three-axial reference acceleration sensor placed on the body of said 3D printer and the three-axial measurement acceleration sensor placed on the table or under the table of said 3D printer are of the same production lot.

Preferably, before the measurements, both sensors - the three-axial reference acceleration sensor placed on the body of said 3D printer and the three-axial measurement acceleration sensor placed on the table or under the table of said 3D printer are heated to the same temperature higher than the ambient temperature.

The three-axial measurement acceleration sensor placed on the table or under the table of said 3D printer is preferably thermally insulated from the table.

**Brief description of the figures**

Fig. 1 presents a 3D printer with a table movable along the Y-axis.
Fig. 2 presents a 3D printer with a table movable along the Z-axis.
Fig. 3 presents the printer with a table movable along the Z-axis, supported on three drive screws Z1, Z2 and Z3.

**Detailed description of the invention**

The inventors of the invention propose a solution based on acceleration sensors made using the MEMS technology (microelectromechanical system, a term denoting an integrated electromechanical structure, in which at least one special dimension is in the micro scale (0.1 - 100 $\mu$m)). The stationary acceleration sensor indicates the value of natural gravity equal to 1 g. The three-axial acceleration sensor shows both the value of the acceleration and its direction with the gravity vector being obtained. As this invention provides for the assembly of two sensors, it is preferable if the sensors are of the same type and preferably from the same production lot. It is important that both sensors react to temperature changes in a similar way. Semiconductor sensors are unfortunately susceptible to temperature fluctuations. Thus, in order to minimise the susceptibility of sensors to temperature fluctuations, they can be heated to the same temperature (e.g. 40°C). Their susceptibility to temperature changes is then significantly reduced. It is more important for both sensors to indicate the same value with identical settings than their high accuracy. The sensor placed on the machine body is the reference sensor, while the sensor placed on the table or under the table is the measurement sensor.

The sensor placed on the table or under the table of the printer must be thermally insulated (the temperature of the table may exceed 100°C).

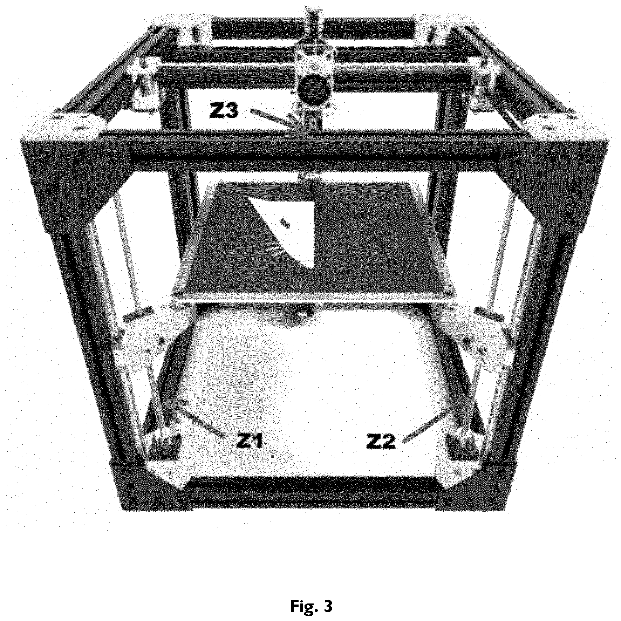

Fig. 3 presents the printer with a table movable along the Z-axis, supported on 3 drive screws Z1, Z2 and Z3.

In the case of printers with the table movable along the Z-axis, the design must be changed and one motor in the Z-axis has to be replaced with three such motors. This means that the table should be supported on the drive screws such that the table may change the angles at which the table is placed against the base, without bending the drive screws. The ability to position the table at any level and thus - table levelling is an advantage of this design. In this case, one three-axial acceleration sensor is attached to the printer body, and another under the table or on the table of the printer. The sensors must be placed parallel to each other during the assembly. A comparison of readouts of the acceleration sensors enables the detection of the lack of parallelity of the table and the printer base. If the sensors are installed such that they are parallel to each other (in all three axes), the calculations transforming sensor readouts to angle values is not required. It is enough to control the three motors Z1, Z2 and Z3 such that the difference between the readouts of both sensors approaches zero.

The method according to the invention enables parallelity of the 3D printer table and the plane determined by the tip of the head nozzle to be achieved, as it refers to the printer body and not to the gravity vector. This method is not susceptible to deviations of the table position from the horizontal position thanks to the use of two sensors.

Additionally, heating the sensors above the ambient temperature mitigates the temperature influence on the readouts. A sensor placed on or under the table is preferably thermally insulated from the table, if both sensors should have the same temperature.

**Example**

1. The reference sensor placed on the printer body indicates the deviations of the substrate on which the printer is placed from the horizontal position. The readouts from the sensor are three numbers (X, Y, Z). The length of the vector (X, Y, Z) after normalisation is 1 g (natural gravity).

2. The measurement sensor placed on or under the table of the 3D printer indicates values (X2, Y2, Z2). The length of the vector (Z2, Y2, Z2) after normalisation is also 1 g.

3. If the sensors are set as ideally parallel during the assembly, the levelling vector may be calculated by subtracting the vector (X, Y, Z) from the vector (X2, Y2, Z2).

4. The obtained error vector (dX, dY, dZ) may be used to control the step motors such that the dX and dY values approach zero.

$$(dX,\ dY,\ dZ) = (X2,\ Y2,\ Z2) - (X,\ Y,\ Z)$$

| Reference sensor | Measurement sensor |
|---|---|

$$dX = X2\text{-}X;\ \ dY = Y2\text{-}Y$$

It controls the motors such that dX and dY are close to zero

In the case of the solutions known from the art, automatic levelling is performed only once, before the printout is started.

In the method according to the invention, automatic levelling may be performed each time when it is found that the dX or dY values are higher than the permitted minimum value. The difference between the sensors should be analysed once the Z-axis is set at a new value, before starting the printout of a new layer.

This means that the table level can be checked after every level change (Z). Automatic levelling is performed if dX or dY are larger than the permitted value.

**Claims**

1.   A method of automatic levelling of a 3D printer table movable along the Z-axis, **characterised in that**

- the deviation of the 3D printer body from the horizontal position is measured using a three-axial reference acceleration sensor placed on the body of said 3D printer and the length of the (X, Y, Z) vector is determined,
- the deviation of the table of the 3D printer from the horizontal position is measured using a three-axial measurement acceleration sensor placed on the table or under the table of said 3D printer and the length of the (X2, Y2, Z2) vector is determined,
- the error vector (dX, dY, dZ) is determined

$$(dX,\ dY,\ dZ) = (X2,\ Y2,\ Z2) - (X,\ Y,\ Z)$$

- if the values dX and dY are greater than zero, the step motors Z1, Z2 and Z3 of the Z-axis adjusting the position of the printer table are actuated in order to ensure the parallel position of the table to the 3D printer base/body, aiming to achieve the dX and dY values close/equal to zero,

wherein both sensors:

the three-axial reference acceleration sensor placed on the body of said 3D printer and
the three-axial measurement acceleration sensor placed on the table or under the table of said 3D printer
are set as parallel to each other along all three axes during the assembly stage of said 3D printer.

2.   A method according to claim 1, **characterised in that** both sensors:
the three-axial reference acceleration sensor placed on the body of said 3D printer and the three-axial measurement acceleration sensor placed on the table or under the table of said 3D printer
are of the same type.

3. A method according to claim 2, **characterised in that** both sensors:
   the three-axial reference acceleration sensor placed on the body of said 3D printer and the three-axial measurement acceleration sensor placed on the table or under the table of said 3D printer
   are from the same production lot.

4. A method according to any of the claims 1-3, **characterised in that** before the measurements, both sensors:
   the three-axial reference acceleration sensor placed on the body of said 3D printer and the three-axial measurement acceleration sensor placed on the table or under the table of said 3D printer
   are heated to the same temperature, higher than the ambient temperature.

5. A method according to any of the claims 1-4, **characterised in that** the three-axial measurement acceleration sensor placed on the table or under the table of said 3D printer is thermally insulated from the table.

**Fig. 1**

**Fig. 2**

**Fig. 3**

Europäisches
Patentamt

European
Patent Office

Office européen
des brevets

# EUROPEAN SEARCH REPORT

**Application Number**

EP 23 46 1528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/186095 A1 (YANG YU-JIE [TW]) 5 July 2018 (2018-07-05) * paragraph [0026]; figures 1, 2 * ----- | 1-5 | INV. B29C64/227 B29C64/245 B29C64/393 B33Y10/00 B33Y30/00 B33Y50/02 |
| A | US 2020/376773 A1 (SWEETLAND MATTHEW [US]) 3 December 2020 (2020-12-03) * paragraph [0051]; figure 1 * ----- | 1 | |

TECHNICAL FIELDS
SEARCHED      (IPC)

B29C
B33Y

The present search report has been drawn up for all claims

| Place of search | Date of completion of the search | Examiner |
|---|---|---|
| The Hague | 20 July 2023 | Nicolas, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

EP 4 424 493 A1

## ANNEX TO THE EUROPEAN SEARCH REPORT
## ON EUROPEAN PATENT APPLICATION NO.

EP 23 46 1528

This annex lists the patent family members relating to the patent documents cited in  the above-mentioned European search report.
The members are as contained in the European Patent Office EDP file on
The European Patent Office is in no way liable for these particulars which are merely given for the purpose of information.

20-07-2023

| Patent document cited in search report | | Publication date | Patent family member(s) | | Publication date |
|---|---|---|---|---|---|
| US 2018186095 | A1 | 05-07-2018 | CN | 108274754 A | 13-07-2018 |
| | | | EP | 3345764 A1 | 11-07-2018 |
| | | | ES | 2833940 T3 | 16-06-2021 |
| | | | JP | 6756667 B2 | 16-09-2020 |
| | | | JP | 2018108727 A | 12-07-2018 |
| | | | KR | 20180080962 A | 13-07-2018 |
| | | | TW | 201825267 A | 16-07-2018 |
| | | | US | 2018186095 A1 | 05-07-2018 |
| US 2020376773 | A1 | 03-12-2020 | CN | 114025900 A | 08-02-2022 |
| | | | EP | 3976297 A1 | 06-04-2022 |
| | | | US | 2020376773 A1 | 03-12-2020 |
| | | | WO | 2020243138 A1 | 03-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 214927116 U
- CN 114683540 A
- CN 205573046 U
- CN 214294497 U
- CN 224626 B1